# EUROPEAN PATENT APPLICATION

(11) **EP 4 550 173 A1**
(43) Date of publication of application: **07.05.2025**
(21) Application number: 23829734.5
(22) Date of filing: 11.05.2023
(51) Int. Cl.: G06F 16/638

(54) **SONG LIST GENERATION METHOD AND APPARATUS, AND ELECTRONIC DEVICE AND STORAGE MEDIUM**

(30) Priority: 01.07.2022 CN 202210775313
(71) Applicant: Beijing Zitiao Network Technology Co., Ltd., Beijing 100190 (CN); Lemon Inc., Grand Cayman, KY1-1205 (KY)
(72) Inventor: LIN, Xiaohui, Beijing 100028 (CN); DAI, Junyu, Beijing 100028 (CN); ZHANG, Luxi, Beijing 100028 (CN); LU, Wei Tsung, Los Angeles, California 90066 (US); WON, Minz, Los Angeles, California 90066 (US); SONG, Xuchen, Los Angeles, California 90066 (US); HE, Jie, Beijing 100028 (CN); XIANG, Haoran, Beijing 100028 (CN)
(74) Representative: Dentons UK and Middle East LLP
(86) International application number: PCT/CN2023/093685
(87) International publication number: WO 2024/001548

(57) **Abstract**

Provided in the embodiments of the present disclosure are a song list generation method and apparatus, and an electronic device, a computer-readable storage medium, a computer program product and a computer program. The method comprises: acquiring candidate song library information, wherein the candidate song library information comprises feature expressions of candidate songs, and the feature expressions represent song features in a plurality of dimensions; determining a similarity score of at least one candidate song according to the candidate song library information and a target feature expression, wherein the target feature expression is a feature expression of a seed song, and the similarity score represents the similarity between the candidate song and the seed song; and determining a target song on the basis of the similarity score of the candidate song, and generating a recommended song list on the basis of the target song. The similarity between the seed song and the candidate song is evaluated by using the feature expressions which represent the song features in the plurality of dimensions, and therefore a set of target songs which are more consistent with the seed song can be obtained, such that the recommended song list generated on the basis of the target songs has better consistency in the aspects of content, style, etc.

## Description

### CROSS-REFERENCE TO RELATED APPLICATION

This application claims the priority of the Chinese Patent Application No. 202210775313.9 filed with the Chinese National Intellectual Property Administration on July 1, 2022, entitled "METHOD AND APPARATUS FOR GENERATING SONG LIST, ELECTRONIC DEVICE, AND STORAGE MEDIUM", which is incorporated by reference herein in its entirety.

### TECHNICAL FIELD

Embodiments of the present disclosure relate to the field of Internet technologies, and in particular, to a method and an apparatus for generating a song list, an electronic device, a computer-readable storage medium, a computer program product and a computer program.

### BACKGROUND

At present, music applications (APP) and music platforms recommend songs to users not only through recommending individual songs, but also through recommending collections that include multiple songs, which is referred to as recommended song lists.

In the prior art, the recommended song lists are mainly generated by classifying songs in the music library based on the audio features thereof and grouping songs with similar audio features.

However, when generating song lists based on the song list generation methods in the prior art, the song lists possibly have inconsistent content and style of songs, which affects the consistency of the song lists, and further affects the accuracy of song list recommendations and listening experience of users.

### SUMMARY

The embodiments of the present disclosure provide a method and an apparatus song list generation, an electronic device, a computer-readable storage medium, a computer program product and a computer program.

In the first aspect, the embodiments of the present disclosure provide a method for generating a song list, comprising:
acquiring candidate song library information, wherein the candidate song library information comprises feature expressions of candidate songs, and the feature expressions represent song features in a plurality of dimensions; determining a similarity score of at least one candidate song, according to the candidate song library information and a target feature expression, wherein the target feature expression is a feature expression of a seed song, and the similarity score represents similarity between a candidate song and the seed song; determining target songs based on similarity scores of the candidate songs, and generate a recommended song list based on the target songs.

In the second aspect, the embodiments of the present disclosure provide an apparatus for generating a song list, comprising:
an acquiring module, configured to acquire candidate song library information, wherein the candidate song library information comprises feature expressions of candidate songs, and the feature expressions represent song features in a plurality of dimensions;
a determining module, configured to determine a similarity score of at least one candidate song according to the candidate song library information and a target feature expression, wherein the target feature expression is a feature expression of a seed song, and the similarity score represents similarity between a candidate song and the seed song;
a generation module, configured to determine target songs based on similarity scores of the candidate songs, and generate a recommended song list based on the target songs.

In the third aspect, the embodiments of the present disclosure provide an electronic device, comprising:
a processor; and a storage communicatively connected with the processor;
the storage stores a computer-executed instruction;
the processor executes the computer-executed instruction stored in the storage to implement the method for generating a song list as described in various possible designs of the first or second aspect.

In the fourth aspect, the embodiments of the present disclosure provide a computer-readable storage medium with a computer-executed instruction stored thereon, wherein the computer-executed instruction, when being executed by a processor, implements the method for generating a song list as described in various possible designs of the first or second aspect.

In the fifth aspect, the embodiments of the present disclosure provide a computer program product comprising a computer program that, when being executed by a processor, implements the method for generating a song list as described in various possible designs of the first or second aspect.

In the sixth aspect, the embodiments of the present disclosure provide a computer program that, when being executed by a processor, implements the method for generating a song list as described in various possible designs of the first or second aspect.

### BRIEF DESCRIPTION OF DRAWINGS

In order to more clearly illustrate the embodiments of the present disclosure or the technical solutions in the prior art, the following provides a brief introduction to the drawings to be used in the description of the embodiments or the prior art. It is apparent that the drawings described below illustrate some embodiments of the present disclosure, and those skilled in the art may obtain other drawings according to these drawings without creative labor.
Fig. 1 is a schematic diagram of an application scenario for a method for generating a song list provided in an embodiment of the present disclosure.
Fig. 2 is a flowchart of a method for generating a song list provided in an embodiment of the present disclosure.
Fig. 3 is a schematic diagram of a data structure of candidate song library information provided in an embodiment of the present disclosure.
Fig. 4 is a flowchart of specific implementation steps of step S101 in the embodiment shown in Fig. 2.
Fig. 5 is a schematic diagram of a relationship between a target feature expression and feature expressions of candidate songs provided in an embodiment of the present disclosure.
Fig. 6 is a flowchart of specific implementation steps of step S102 in the embodiment shown in Fig. 2.
Fig. 7 is a schematic diagram of determining a similarity score corresponding to a candidate song provided in an embodiment of the present disclosure.
Fig. 8 is another flowchart of a method for generating a song list provided in an embodiment of the present disclosure.
Fig. 9 is a flowchart of specific implementation steps of step S203 in the embodiment shown in Fig. 8.
Fig. 10 is a schematic diagram of another relationship between a target feature expression and feature expressions of the candidate song provided in the embodiment of the present disclosure.
Fig. 11 is another schematic diagram of determining the similarity score corresponding to the candidate songs provided in an embodiment of the present disclosure.
Fig. 12 is a structural block diagram of an apparatus for generating a song list provided in an embodiment of the present disclosure.
Fig. 13 is a structural schematic diagram of an electronic device provided in an embodiment of the present disclosure.
Fig. 14 is a hardware structural schematic diagram of an electronic device provided in an embodiment of the present disclosure.

### DETAILED DESCRIPTION

In order to make the objectives, technical solutions, and advantages of the embodiments of the present disclosure clearer, the technical solutions in the embodiments of the present disclosure are described clearly and completely below with reference to the accompanying drawings in the embodiments of the present disclosure. It is apparent that the described embodiments are not exhaustive, but part of the embodiments of the present disclosure. Based on the embodiments of the present disclosure, all other embodiments obtained by those of ordinary skill in the art without creative work shall fall within the protection scope of the present disclosure.

The following explains an application scenario of an embodiment of the present disclosure.

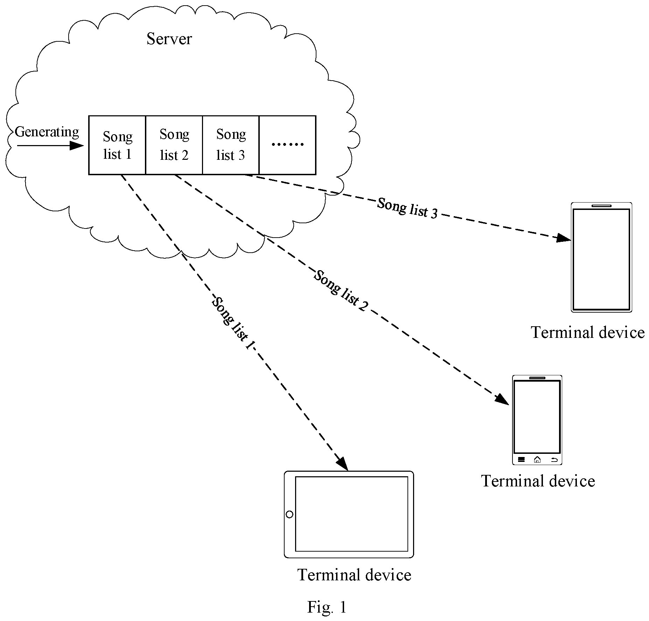

Fig. 1 is a schematic diagram of an application scenario for a method for generating a song list provided in an embodiment of the present disclosure. The method for generating a song list provided in the embodiment of the present disclosure may be applied to an application scenario for recommending song lists. More specifically, it may be applied to application scenarios for customized song list recommendations based on music playing scenarios, user preferences, or others. As shown in Fig. 1, the method provided in the embodiment of the present disclosure is applied to a server, such as a music platform server where the server communicates with a terminal device, and the terminal device is a device operated by a user and used for running a music APP, such as a smart phone, a tablet computer, and the like. The server generates a plurality of recommended song lists of different categories (shown in the figure as a song list 1, a song list 2, a song list 3) through the method for generating a song list provided in the embodiment of the present disclosure, and then recommends a matching song list to the terminal device by following a recommendation rule based on a music playing scenario, user preferences, or the like, to complete the process of song list recommendation.

There are mainly two processes in the application scenario of song list recommendation: generating a song list; and recommending the song list. In the process of generating a song list, a plurality of song lists are generated through classifying songs in the song library by features. The method for generating a song list provided in the embodiment of the present disclosure is mainly applied to such a process. The process of song list recommendation is to recommend the song list generated in the song list generation process to users based on a preset rule. In the prior art, the recommended song lists are mainly generated by classifying songs in the music library based on the audio features thereof and grouping songs with similar audio features. For example, several songs with a fast audio tempo are grouped into a category to generate a recommended song list named "Fast Songs", and several songs with a slower audio tempo are grouped into a category to generate a recommended song list named "Slow Songs". For another example, the songs are classified based on the tags to generate song lists, such as "Pop Songs" and "Songs in the 80s".

However, such a song list generation method in the prior art is only applicable to simple song list recommendation rules (in the process of subsequent song list recommendations). For example, the song list of "Fast Songs" or the song list "Slow Songs" is recommended to a user based on the listening history of the user. However, for complex song list recommendation rules, such as recommending song lists based on user preferences or music scenarios (for example, the user preferences or music scenarios are commonly determined upon features in plurality of dimensions, such as an audio, a music style, a song release year, a language, and the like), the song lists generated based on a single feature dimension in the prior art cannot accurately recommend song lists based on complex song list recommendation rules. For example, the song list "Old songs in the 80s" include both "Fast Songs" and "Slow Songs". As a result, songs in the song list may have inconsistent content or style, affecting the recommendation accuracy of song lists and the listening experience of users.

The embodiments of the present disclosure provide a method for generating a song list, which obtains the similarity of candidate songs by acquiring feature expressions of the candidate songs and the feature expression of a seed song, so as to generate a recommended song list and solve the above problem.

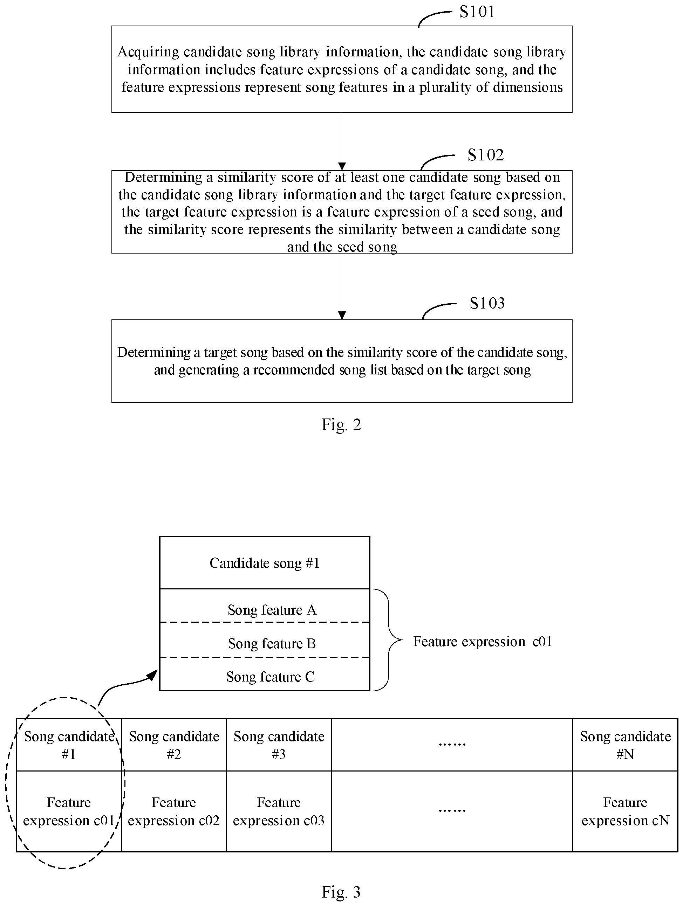

Referring to Fig. 2, a flow chart of a method for generating a song list provided in an embodiment of the present disclosure is shown. The method of this embodiment may be applied in a server, and the method for generating a song list includes:
Step S101: Acquiring candidate song library information, which includes feature expressions of a candidate song, and the feature expressions represent song features in a plurality of dimensions.

As an example, an executing subject of the method provided in the embodiment of the present disclosure is a server, specifically, such as a music platform server. The music platform or music APP server provides music services to the terminal devices (clients) based on the music libraries it owns, where a candidate music library is a part or all of the blocks, and the candidate song library information is used to describe the feature expressions of the candidate songs, that is, song features of the candidate songs in a plurality of dimensions. The feature expression of a candidate song may be obtained by processing the candidate song through a preset algorithm model, such as a pre-trained neural network model.

Fig. 3 is a schematic diagram of a data structure of candidate song library information provided in an embodiment of the present disclosure. As shown in Fig. 3, the candidate library information corresponds to N candidate songs (shown in the figure as candidate songs #1 to #N). Each candidate song corresponds to one feature expression (shown in the figure as the feature expressions c01 to cN). As an example, for the feature expression c01 corresponding to the candidate song A (the feature expression have the same data structures), the feature expression includes song features in three dimensions, which are shown in the figure as a song feature A, a song feature B and a song feature C. Specifically, for example, the feature A represents the style of the song, which is determined by the tag information of the candidate song; the feature B represents the song release year of the song, which is determined by the tag information of the candidate song; feature C represents the rhythm of the song, which is determined by the audio feature of the song. Each song feature corresponds to one feature value, which represents a specific category under the song feature; more specifically, the feature value may be a normalized value, a preset category identifier, an ordinary integer value, and the like, the specific implementations of the feature value are not limited here.

In one possible implementation, the candidate library information is pre-generated. That is, before acquiring the candidate library information, the method further includes:
processing the candidate songs in the candidate library by using a preset first feature extraction model, to obtain the candidate song library information, the first feature extraction model is configured to extract at least two first features of the songs.

As an example, the first feature extraction model is an algorithmic model configured to extract multiple features of songs, such as a pre-trained neural network model. By using the first feature extraction model to extract features from candidate songs in the candidate song library, feature expressions of individual candidates can be obtained, and the candidate song library information can be further be obtained. The candidate song library is part or all of the blocks. The first feature is the song feature corresponding to the first feature extraction model, such as the song language, the song style, the song release year, and the like. The first feature extraction model evaluates candidate songs from a plurality of dimensions by extracting at least two song features, thereby improving the accuracy of candidate song classification.

Furthermore, the first feature extracted by the first feature extraction model is determined by a first input parameter of the first feature extraction model. In a possible implementation, the first input parameter is a preset fixed value, so that the first feature extraction model, in its default state, extracts features for a fixed number of dimensions of the candidate songs and generates the corresponding candidate song library information. In some specific application scenarios, for example, when the candidate library is large and there are numerous candidate songs, processing each candidate song consumes computing resources of the server, so the candidate song library information may not be generated in real time. In the present embodiment, because the candidate song library information is pre-generated through the first feature extraction model based on the preset first input parameter, when the method for generating a song list provided in the present embodiment is executed, the candidate song library information that has been generated and represented feature expressions of the large quantity of candidate songs in the candidate song library can be directly read, thereby improving the speed and efficiency in generating a recommended song list.

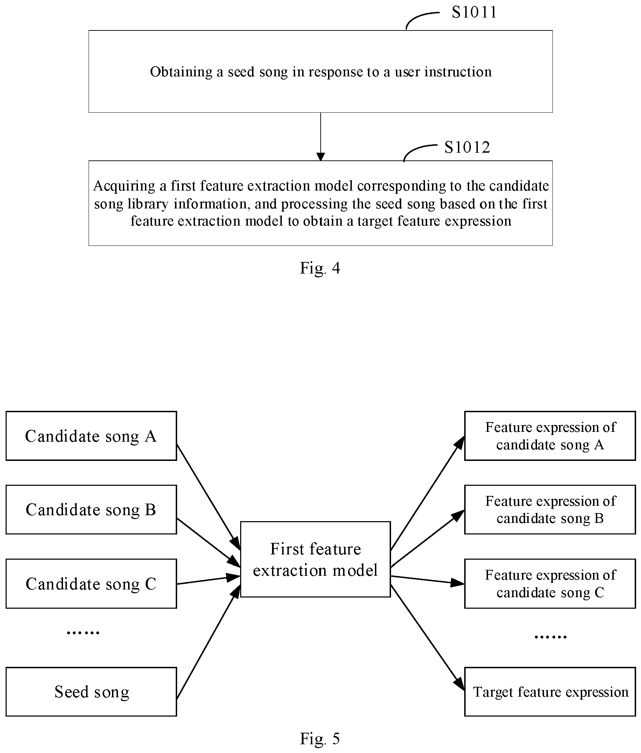

As an example, as shown in Fig. 4, after generating the candidate library information based on the first feature extraction model, the method further includes:
Step S1011: obtaining a seed song in response to a user instruction.
Step S1012: acquiring the first feature extraction model corresponding to the candidate song library information, and processing the seed song based on the first feature extraction model to obtain a target feature expression.

As an example, the seed song includes one or more songs and may not be included in the candidate song library (that is, it is not a candidate song). The seed song is determined based on a user instruction, and more specifically, for example, the user selects one or more songs from the entire library as the seed song by entering a command to the server. As another example, the user inputs a command into the server to randomly obtain one or more songs in the entire library or in a song library of a specific category, and uses the songs as the seed songs.

Furthermore, in the obtaining step, the first feature extraction model for generating the candidate song library information is obtained, and the seed song is processed based on the first feature extraction model to obtain a feature expression of the seed song, that is, the target feature expression. Because the same first feature extraction model is used for processing, the target feature expression has the same data structure as the feature expressions of the candidate songs in the candidate song library information, which represents the same song feature. Specifically, for example, both the target feature expression and the feature expressions of candidate songs in the candidate library information include the feature A, the feature B, and the feature C (but with different feature values).

Fig. 5 is a schematic diagram of a relationship between a target feature expression and feature expressions of candidate songs provided in an embodiment of the present disclosure. As shown in Fig. 5, the target feature expression and the feature expressions of candidate songs (the candidate song A, the candidate song B, and the candidate song C are illustratively shown in the figure) are obtained by processing the seed song and the candidate songs, respectively, based on the preset first feature extraction model. Thus, the target feature expression has the same structure as and the feature expressions of the candidate songs, and therefore the similarity of the two can be evaluated in a plurality of dimensions in the subsequent steps, thereby improving the matching degree between the generated recommended song list and the seed song in a plurality of dimensions.

Step S102: determining a similarity score of at least one candidate song based on the candidate song library information and the target feature expression, the target feature expression is the feature expression of the seed song, and the similarity score represents the similarity between a candidate song and the seed song.

For example, after acquiring the target feature expression, based on the same data structure, the feature expression of each candidate song included in the candidate library information and the target feature expression are compared in each feature dimension to obtain the similarity score of the candidate song.

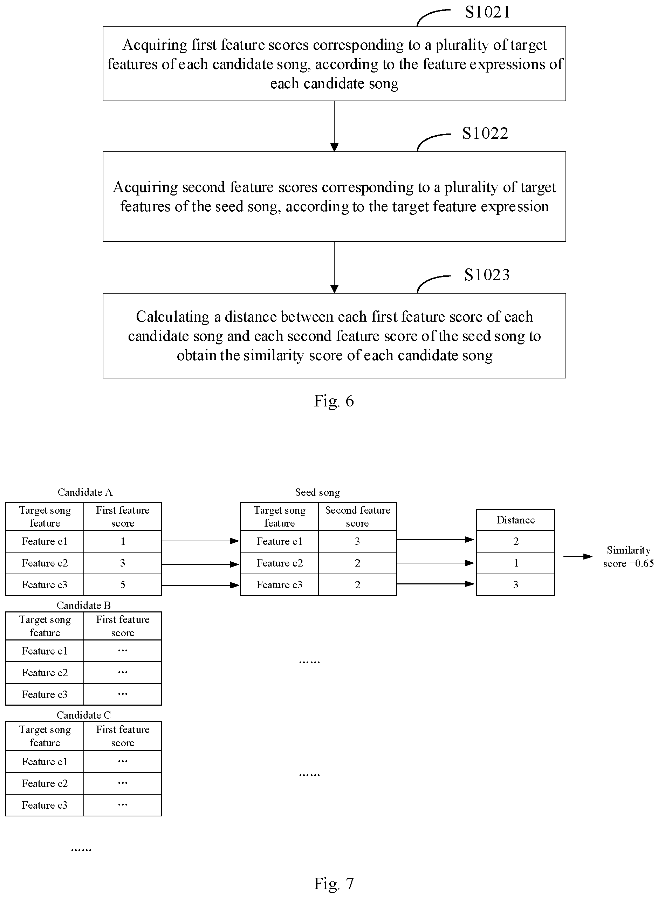

In one possible implementation, as shown in Fig. 6, step S102 is implemented by the following specific steps:
Step S1021: acquiring first feature scores corresponding to a plurality of target features of each candidate song, according to the feature expressions of each candidate song.
Step S1022: acquiring second feature scores corresponding to a plurality of target features of the seed song, according to the target feature expression.
Step S1023: calculating a distance between each first feature score of each candidate song and each second feature score of the seed song to obtain the similarity score of each candidate song.

As an example, based on the same data structure of the feature expressions of the candidate songs and the target feature expression, the candidate songs and the seed song correspond to a plurality of target song features, such as the feature A, the feature B, the feature C, and the feature D. Furthermore, the feature value corresponding to each song feature is the feature score. Specifically, the feature scores corresponding to the plurality of target features of each candidate song are the first feature scores; the feature scores corresponding to the plurality of target song features of the seed song are the second feature scores. If there are a plurality of the seed songs, an average value of the feature scores of the target song features of the plurality of the seed songs is the second feature score. For each candidate song and each seed song, each first feature score is in a one-to-one correspondence with each second feature score. Thus, the distance between the first feature score and the second feature score which are in the one-to-one correspondence is calculated to obtain a sum of total distance, that is, the similarity score of the candidate songs.

As an example, Fig. 7 is a schematic diagram of determining similarity scores corresponding to candidate songs provided in an embodiment of the present disclosure. As shown in Fig. 7, the distance values of each candidate song (shown in the figure as the candidate song A, the candidate song B, the candidate song C) and the seed song are calculated based on the feature expressions of the candidate song and the target feature expression. Specifically, the target song features of the candidate song A include a feature c1, a feature c2, and a feature c3 (same for the candidate song B and the candidate song C, which is not elaborated here). The first feature score corresponding to the feature c1 is 1, the first feature score corresponding to the feature c2 is 3, and the first feature score corresponding to the feature c3 is 5. The target song features of the seed song also include a feature c1, a feature c2, and a feature c3. The second feature score corresponding to the feature c1 of the seed song is 3, the second feature score corresponding to the feature c2 is 2, and the second feature score corresponding to the feature c3 is 2. After that, an absolute value of a difference between the first feature score and the second feature score is calculated for each of the feature c1, the feature c2 and the feature c3. That is, the distance value between the candidate song A and the seed song for the feature c1 is 2, the distance value for the feature c2 is 1, and the distance value for the feature c3 is 3. Then, the sum of the distances between the candidate song A and the seed song is calculated as 6, and then the sum of the sum is mapped based on a preset mapping relationship to obtain a similarity score. For example, the similarity score is (0,1]; when the sum of the distance is 0, the similarity score is 1; when the sum of the distance is 1, the similarity score is 0.95, and so on. As an example, as shown in the figure, when the sum of the distance is 6, the corresponding similarity score is 0.65. The specific implementation of the mapping relationship may be set as needed, and will not be elaborated here.

Step S103: determining a target song based on the similarity score of the candidate song, and generating a recommended song list based on the target song.

As an example, after acquiring the similarity score of each candidate song, the similarity of the candidate song relative to the seed song is obtained based on the similarity score. Because such similarity is obtained by evaluating the song features in plurality of the dimensions, it can better evaluate the consistency with the seed song. Then, in one possible implementation, the candidate song having the similarity score greater than a preset similarity threshold is taken as the target song. In another possible implementation, the similarity scores of all candidate songs are sorted, and the top N candidate songs are taken as the target songs. Furthermore, based on the determined target songs, the corresponding recommended song list is generated.

In the embodiments of the present disclosure, the candidate song library information is obtained, the candidate song library information includes the feature expressions of the candidate song, and the feature expressions represent the song features in a plurality of dimensions. Based on the candidate song library information and the target feature expression, the similarity score of at least one candidate song is determined. The target feature expression is the feature expression of the seed song, and the similarity score represents the similarity between the candidate song and the seed song. Based on the similarity score of the candidate song, the target song is determined, and a recommended song list is generated based on the target song. Because in the process of generating the recommended song list, the similarity between the seed song and the candidate song is evaluated by using the feature expressions that represent the song features in the plurality of dimensions, a set of target songs that are better consistent with the seed song can be obtained, so that the recommended song list generated based on the target songs has better consistency in terms of content and style, thereby improving the listening experience of users, and improving the accuracy of subsequent recommendations of song lists.

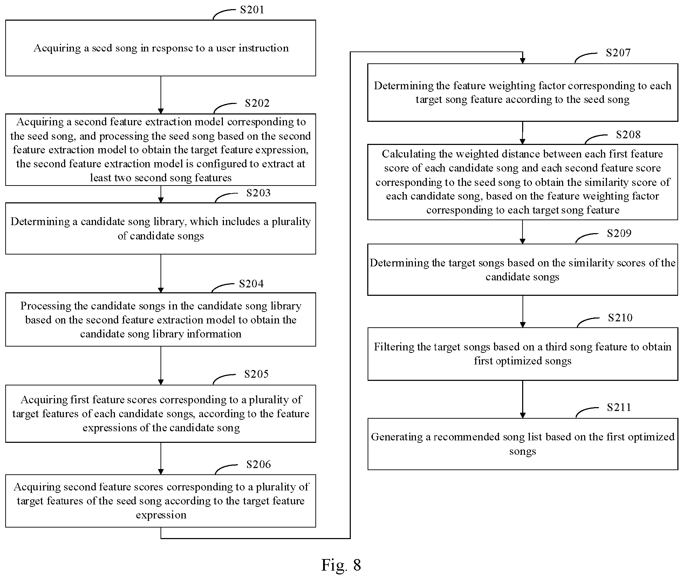

Referring to Fig. 8, another flowchart of a method for generating a song list provided in an embodiment of the present disclosure is shown. The method in the present embodiment further includes a step for determining the candidate song library information and target feature expression on the basis of the embodiment shown in Fig. 2, and further described the step S102 in details. The method for generating a song list includes:
Step S201: acquiring a seed song in response to a user instruction.
Step S202: acquiring a second feature extraction model corresponding to the seed song, and processing the seed song based on the second feature extraction model to obtain the target feature expression, the second feature extraction model is configured to extract at least two second song features.

As an example, the seed song includes one or more songs and the seed song is determined based on the user instruction. More specifically, for example, the user selects one or more songs from the entire library as the seed songs by entering a command to the server. As another example, the user inputs a command into the server to randomly obtain one or more songs in the entire library or in a song library of a specific category and use the songs as the seed songs.

Furthermore, after the seed song is determined, a second feature extraction model matching with the seed song is obtained based on the specific feature information of the seed song. The second feature extraction model is configured to extract at least two second song features. Specifically, for example, based on the distribution method of the seed song (for example, including an album song or an online song), a corresponding second feature extraction model is determined. If the seed song is the album song, the corresponding second feature extraction model is determined as a feature extraction model A; and if the seed song is the online song, the corresponding second feature extraction model is determined as a feature extraction model B.

For different seed songs stored in the song library, there is usually a problem that the tags are inconsistent. For example, if the seed song is the album song, more detailed tag information, such as a publisher of the song, the composer information, and the band information, is stored in the song library; but if the seed song is the online song, only simple tag information, such as the singer and composer of the song, is stored in the song library. In this embodiment, when extracting the song features of the seed songs, for different seed songs, different song features are extracted as the target song features for subsequent similarity evaluation, so as to improve the accuracy of the feature description of the seed song and avoid the problems of missing features or inaccurate feature description, which may affect the accuracy of the recommended song list generated based on the seed song.

Step S203: determining a candidate song library, which includes a plurality of candidate songs.

As an example, the candidate song library is a set of candidate songs that subsequently participate in a similarity evaluation. The candidate song library may be part or all of the song library. Optionally, the candidate song library may be part of the song library, and the server of a music platform or a music APP has a huge song library. In this embodiment, the candidate song library needs to be processed based on an algorithm model to obtain the corresponding feature expression (i.e., the candidate song library information). Thus, too many candidate songs increase the time consumption and the computing load of the server, and affects the stability of the server operation.

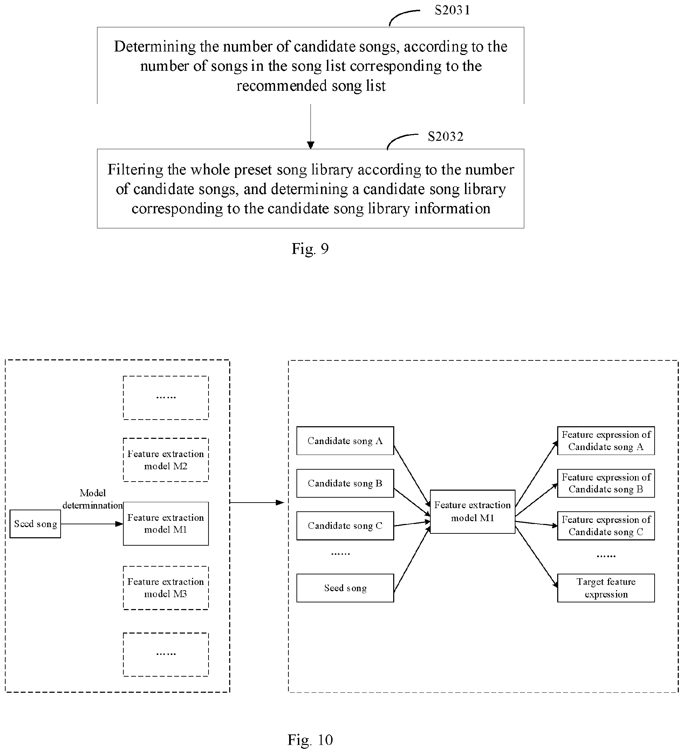

As an example, as shown in Fig. 9, step S203 may be implemented by the following implementation steps:
Step S2031: determining the number of candidate songs, according to the number of songs in the song list corresponding to the recommended song list.
Step S2032: filtering the whole preset song library according to the number of candidate songs, and determining a candidate song library corresponding to the candidate song library information.

In a possible implementation, the generated recommended song list has a corresponding number of songs in the song list, which may be preset based on needs, such as 30 songs. In practice, when a huge number of songs are included in the song list, the resulting song list usually has a high stability and a continuous playing repetition, such as a song list with the content of "Classic Love Songs of the 90s", and the song list is stable and will not change frequently after being generated. When a few songs are included in the song list, the song list usually focus on the current high-popularity songs, but the song list has a low continuous playing repetition and stability, such as the song list with the content "Today's Most Popular Love Songs". Based on the above introduction, the higher the number of candidate songs in the library, the greater the load on the server. In the present embodiment, the type of the song list is evaluated according to the number of songs in the song list corresponding to the recommended song list, so as to determine the corresponding candidate songs. When a small number of songs are included in the song list, the candidate song library with a smaller capacity (a smaller number of candidate songs) is used to carry out the subsequent song list generation steps for such recommended song lists, so as to reduce the load on the server at the same time of satisfying business needs. When a large number of songs are included in the song list, the candidate song library with a large capacity (a larger number of candidate songs) is used to carry out the subsequent song list generation steps, so as to improve the recommendation accuracy and quality of the songs in the recommended song list.

Step S204: processing the candidate songs in the candidate song library based on the second feature extraction model to obtain the candidate song library information.

For example, after determining the candidate song library, the candidate songs in the candidate song library are processed based on the second feature extraction model corresponding to the seed songs, and the feature expressions of the candidate songs are extracted to obtain the candidate song library information that represents the song features of the candidate songs. Extracting the feature expression of the song based on the second feature extraction model and generating the candidate song library information is implemented in a way similar to that of extracting the feature expressions of the songs based on the first feature extraction model and generating the candidate song library information in the embodiment shown in Fig. 2, which will not be elaborated here. As an example, the first feature extraction model and the second feature extraction model can be transformed by adjusting input parameters. For example, the first feature extraction model and the second feature extraction model use the same basic feature extraction model. When the basic feature extraction model uses a first input parameter, it is the first feature extraction model for extracting the first song features of the songs. When the basic feature extraction model uses a second input parameter, it is the second feature extraction model for extracting the second song features of the songs.

It should be noted that the second feature extraction model is determined by the seed song, and more specifically, for example, the second song feature extracted by the second feature extraction model is determined by the second input parameter of the second feature extraction model. The second input parameter is determined based on the seed song, and the specific implementation may be referred to the description of step S202, which is not elaborated here.

Fig. 10 is a schematic diagram of another relationship between a target feature expression and the feature expressions of the candidate song provided in an embodiment of the present disclosure. As shown in Fig. 10, the method for generating a song list provided in the present embodiment is triggered by using a seed song as a starting point. That is, through a seed song determined by the user, the corresponding second feature extraction model (shown in the figure as a feature extraction model M1) is determined from a plurality of preset feature extraction models (shown in the figure as a feature extraction model M2, a feature extraction model M3, and the like.). Then, based on the second feature extraction model, the seed song and the candidate songs are processed to obtain the corresponding target feature expression and the feature expressions of the candidate song, which further improves matching degree between the feature extraction model (the second feature extraction model) and the seed song while providing the same data structure of the target feature expression and the feature expressions of the candidate songs. Thus, by processing the candidate songs based on the second feature extraction model, the feature expressions of the candidate songs obtained may better match the feature expression of the seed song, which makes the similarity evaluation based on feature expression better reflect the similarity between the candidate songs and the seed song, so that the songs in the recommended song list are more consistent with the seed song.

Step S205: acquiring first feature scores corresponding to a plurality of target features of each candidate songs, according to the feature expressions of the candidate song.

Step S206: acquiring second feature scores corresponding to a plurality of target features of the seed song according to the target feature expression.

Steps S205-S206 are steps for calculating the first feature scores and the second feature scores, and the specific implementations may be referred to description of the embodiment shown in Fig. 6, which is not elaborated.

Step S207: determining the feature weighting factor corresponding to each target song feature according to the seed song.

Step S208: calculating the weighted distance between each first feature score of each candidate song and each second feature score corresponding to the seed song to obtain the similarity score of each candidate song, based on the feature weighting factor corresponding to each target song feature.

As an example, the target song features has different importance for different seed songs. For example, for an operatic song (a target song A), the release year of the song (a target song feature C1) has less influence on it, while the song language (a target song feature C2) has a greater impact on it. For a pop song (a target song B), the release year of the song (a target song feature C1) has a greater impact on it, while the song language (a target song feature C2) has less influence on it. Thus, for different seed songs, an appropriate weighting factor is provided for matching with a corresponding target song feature, that is, the feature weighting factor corresponding to each target song feature is determined.

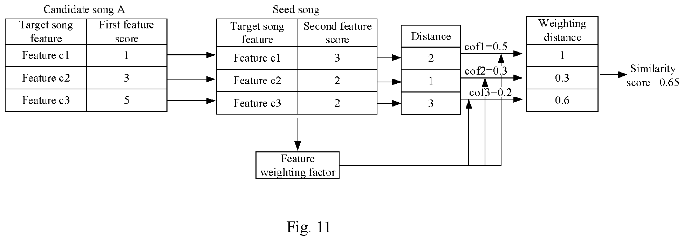

Furthermore, after determining the feature weighting factor corresponding to each target song feature, the similarity score between each candidate song and the seed song are calculated based on the first feature score and the second feature score; in the above calculating process, after acquiring the distance between each candidate song and the seed song, the distance is weighted based on the feature weighting factor corresponding to each target song feature, so as to obtain the weighted distance corresponding to each target song feature. After that, the sum of the weighted distances corresponding to the target song features is calculated to obtain the similarity score. Fig. 11 is another schematic diagram of determining the similarity score corresponding to the candidate song provided in an embodiment of the present disclosure. As shown in Fig. 11, the distance value of each of the candidate songs (for example the candidate songs A, B, and C, and only the candidate song A is shown in the figure) and the seed song is are calculated based on the feature expressions of the candidate song, the target feature expressions, and the feature weighting factors. Specifically, the target song features of the candidate song A include a feature c1, a feature c2, and a feature c3 (same for the candidate song B and the candidate song C, which is not elaborated here). The first feature score corresponding to the feature c1 is **1,** the first feature score corresponding to the feature c2 is 3, and the first feature score corresponding to the feature c3 is 5. The target features of the seed song also include a feature c1, a feature c2, and a feature c3. The second feature score corresponding to the feature c1 of the seed song is 3, the second feature score corresponding to the feature c2 is 2, and the second feature score corresponding to the feature c3 is 2. After that, an absolute value of a difference between the first feature score and the second feature score are calculated for each of the feature c1, the feature c2 and the feature c3. That is, the distance value between the candidate song A and the seed song for the feature c1 is 2, the distance value for the feature c2 is 1, and the distance value for the feature c3 is 3. Then, the sum of the distances between the candidate song A and the seed song is calculated as 6; next, the distance value 2 of c1, the distance value 1 of c2, and the distance value 3 of c3 are weighted based on the feature weighting factor [0.5, 0.3, 0.2] (shown as cof1=0.5, cof2=0.3, cof3=0.2) determined upon the seed song to obtain the weighted distance values [1, 0.3, 0.6]. Furthermore, the sum of the weighted distances is 1.9. After that, the sum of the distance is mapped based on a preset mapping relationship to obtain the similarity score. As an example, as shown in the figure, when the sum of the distance is 1.9, the corresponding similarity score is 0.84. The specific implementation of the mapping relationship may be set as needed, which is not elaborated here.

In the embodiments of the present disclosure, the corresponding feature weighting factor is determined upon the seed song, and the weighted distance between each candidate song and the seed song is calculated based on the feature weighting factor, so as to obtain the similarity score corresponding to each candidate song. Because the feature weighting factor is determined upon the seed song, weighting the distances of the feature dimensions based on the feature weight factor can better reflect the features of the seed song itself, thereby obtaining more accurate similarity score, making the songs have high song consistency and simultaneously further increasing the similarity of the songs in the final obtained recommended song list with the seed song.

Step S209: determining the target songs based on the similarity scores of the candidate songs.

Step S210: filtering the target songs based on a third song feature to obtain first optimized songs.

As an example, after determining the target songs, in the present embodiment, in order to further improve the accuracy of the recommended song list generated, the target songs are further filtered based on the third song feature to obtain the first optimized songs, and the recommended song list is generated based on the first optimized songs in the subsequent steps. As an example, the third song feature includes at least one of the following: a song language, a song style, a song release year, a song repetition, and a singer repetition. The "song repetition" is one of the song features of the target song, which means that if one target song is duplicated with another target song among the multiple target songs generated, the feature "song repetition" of the target song is 1, and if not, this feature is zero. Similarly, the "singer repetition" is also one of the song features of the target song, which means that if a singer of one target song is the same as that of another target song among the multiple target songs generated, the feature "singer repetition" of the target song is 1, and if not, this feature is 0.

It should be noted that the third song feature in the steps of the present embodiment is a feature contained in the tag of the song, which means that the feature may be obtained by directly reading the tag of the candidate song in the song library without processing the song through an algorithm model. Thus, in the steps of the present embodiment, the target songs are further screened by means of post-filtering, so that the target songs can be further screened quickly with a lower computing resource consumption, thereby further improving the accuracy of the generated recommended song list.

Step S211: generating a recommended song list based on the first optimized songs.

In the present embodiment, step S211 is implemented in a same way as that of step S103 in the embodiment shown in Fig. 2 of the present disclosure, which is not elaborated herein.

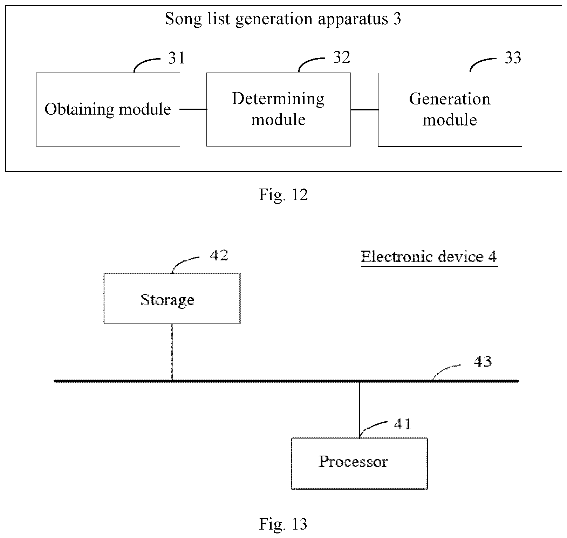

For the method for generating a song list in the embodiments above, Fig. 12 is a structural block diagram of an apparatus for generating a song list provided in an embodiment of the present disclosure. For illustrative purposes, only those parts relevant to the embodiments of the present disclosure are shown. Referring to Fig. 12, the apparatus 3 for generating a song list includes:
an acquiring module 31, configured to obtain candidate song library information, the candidate song library information includes feature expressions of a candidate song, and the feature expressions represent song features in a plurality of dimensions;
a determining module 32, configured to determine a similarity score of at least one candidate song based on the candidate song library information and a target feature expression, where the target feature expression is a feature expression of the seed song, and the similarity score represents the similarity between the candidate song and the seed song;
a generation module 33, configured to determine a target song based on the similarity score of the candidate song, and generate a recommended song list based on the target song.

In one embodiment of the present disclosure, after acquiring the candidate song library information, the acquiring module 31 is further configured to: acquire a seed song in response to a user instruction; acquire a first feature extraction model corresponding the candidate song library information, and process the seed song based on the first feature extraction model to obtain the target feature expression; the first feature extraction model is configured to extract at least two first song features, and the first song features are used to generate the candidate song library information.

In an embodiment of the present disclosure, before acquiring the candidate song library information, the acquiring module 31 is further configured to: acquire a seed song in response to a user instruction; acquire a second feature extraction model corresponding to the seed song, and process the seed song based on the second feature extraction model to obtain the target feature expression; the second feature extraction model is configured to extract at least two second song features.

In one embodiment of the present disclosure, when acquiring the candidate song library information, the acquiring module 31 is specifically configured to: acquire a second feature extraction model corresponding to a seed song; process the candidate song to obtain the candidate song library information based on the second feature extraction model.

In one embodiment of the present disclosure, the determining module 32 is specifically configured to: acquire first feature scores corresponding to a plurality of target song features of each candidate song, according to the feature expressions of each candidate song; acquire second feature scores corresponding to the plurality of target song features of the seed song, according to the target feature expression; calculate a distance between each first feature score corresponding to the candidate song and each second feature score corresponding to the seed song to obtain the similarity score corresponding to each candidate song.

In an embodiment of the present disclosure, when calculating the distance between each first feature score corresponding to each candidate song and each second feature score corresponding to the seed song to obtain the similarity score corresponding to each candidate song, the determining module 32 is specifically configured to: determine a feature weighting factor corresponding to each target song feature according to the seed song; calculate a weighted distance between each first feature score corresponding to each candidate song and each second feature score corresponding to the seed song to obtain the similarity score corresponding to each candidate song, based on the feature weighting factor corresponding to each target song feature.

In one embodiment of the present disclosure, after determining the target song based on the similarity score of the candidate song, the generation module 33 is further configured to: filter the target song based on a third song feature to obtain a first optimized song. When generating a recommended song list based on the target song, the generation module 33 is specifically configured to: generate a recommended song list based on the first optimized song; the third song feature includes at least one of the following: a song language, a song style, a song release year, a song repetition, and a singer repetition.

In one embodiment of the present disclosure, before acquiring the candidate song library information, the acquiring module 31 is further configured to: determine the number of candidate songs according to the number of songs in the song list corresponding to the recommended song list; filter the whole preset song library, according to the number of candidate songs, and determine the candidate songs corresponding to the candidate song library information.

The acquiring module 31, the determining module 32, and the generation module 33 are connected sequentially. The apparatus 3 for generating a song list provided in the present embodiment can be used to implement the technical solution of the above method embodiments, with same implementation principle and technical effect, which are not elaborated in the present embodiment.

Fig. 13 is a structural schematic diagram of an electronic device provided in an embodiment of the present disclosure. As shown in Fig. 13, the electronic device 4 includes:
a processor 41, and a storage 42 communicatively connected with the processor 41;
the storage 42 stores a computer-executed instruction; and
the processor 41 executes the computer-executed instruction stored in the storage 42 to implement the method for generating a song list shown in Fig. 2 to Fig. 11.

Optionally, the processor 41 and the storage 42 are connected through a bus 43.

The relevant introduction can be referred to the relevant description and effect corresponding to the steps in the embodiments of Fig. 2 to Fig. 11, which are not elaborated here.

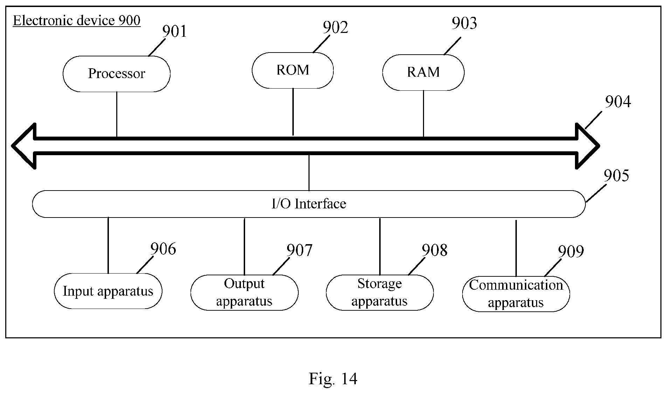

Referring to Fig. 14, Fig. 14 illustrates a schematic structural diagram of an electronic device 900 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in Fig. 14 is merely an example, and should not pose any limitation to the functions and the range of use of the embodiments of the present disclosure.

As illustrated in Fig. 14, the electronic device 900 may include a processing apparatus 901 (e.g., a central processing unit, a graphics processing unit, etc.), which can perform various suitable actions and processing according to a program stored in a read-only memory (ROM) 902 or a program loaded from a storage apparatus 908 into a random-access memory (RAM) 903. The RAM 903 further stores various programs and data required for operations of the electronic device 900. The processing apparatus 901, the ROM 902, and the RAM 903 are interconnected by means of a bus 904. An input/output (I/O) interface 905 is also connected to the bus 904.

Usually, the following apparatus may be connected to the I/O interface 905: an input apparatus 906 including, for example, a touch screen, a touch pad, a keyboard, a mouse, a camera, a microphone, an accelerometer, a gyroscope, or the like; an output apparatus 907 including, for example, a liquid crystal display (LCD), a loudspeaker, a vibrator, or the like; a storage apparatus 908 including, for example, a magnetic tape, a hard disk, or the like; and a communication apparatus 909. The communication apparatus 909 may allow the electronic device 900 to be in wireless or wired communication with other devices to exchange data. While Fig. 14 illustrates the electronic device 900 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 909 and installed, or may be installed from the storage apparatus 908, or may be installed from the ROM 902. When the computer program is executed by the processing apparatus 901, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to perform the method shown in the above embodiments.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances. For example, the first acquiring unit may also be described as "a unit for acquiring at least two Internet Protocol addresses".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

In a first aspect, according to one or more embodiments of the present disclosure, a method for generating a song list is provided, the method including:
acquiring candidate song library information, wherein the candidate song library information comprises feature expressions of a candidate song, and the feature expressions represent song features in a plurality of dimensions; determining a similarity score of at least one candidate song, according to the candidate song library information and a target feature expression, wherein the target feature expression is a feature expression of a seed song, and the similarity score represents similarity between the candidate song and the seed song; determining a target song based on similarity score of the candidate song, and generate a recommended song list based on the target song.

In one or more embodiments of the present disclosure, after acquiring the candidate song library information, further comprising: acquiring a seed song in response to a user instruction; acquiring a first feature extraction model corresponding to the candidate song library information, and processing the seed song based on the first feature extraction model to obtain the target feature expression, wherein the first feature extraction model is configured to extract at least two first song features, and the first song feature are used to generate the candidate song library information.

In one or more embodiments of the present disclosure, before acquiring the candidate song library information, further comprising: acquiring a seed song in response to a user instruction; acquiring a second feature extraction model corresponding to the seed song, and processing the seed song based on the second feature extraction model to obtain the target feature expression, wherein the second feature extraction model is used to extract at least two second song features.

In one or more embodiments of the present disclosure, the acquiring the candidate song library information includes: acquiring a second feature extraction model corresponding to the seed song; processing the candidate songs, based on the second feature extraction model, to obtain the candidate song library information.

In one or more embodiments of the present disclosure, the determining a similarity score of at least one candidate song according to the candidate song library information and a target feature expression comprises: acquiring first feature scores corresponding to a plurality of target features of each candidate song, according to the feature expressions of each candidate song; acquiring second feature scores corresponding to a plurality of target features of the seed song, according to the target feature expression; calculating a distance between each first feature score corresponding to each candidate song and each second feature score corresponding to the seed song to obtain the similarity score corresponding each candidate song.

In one or more embodiments of the present disclosure, the calculating a distance between each first feature score corresponding to each candidate song and each second feature score corresponding to the seed song to obtain the similarity score corresponding to each candidate song comprises: determining a feature weighting factor corresponding to each target song feature, according to the seed song; calculating a weighted distance between each first feature score corresponding to each candidate song and each second feature score corresponding to the seed song to obtain the similarity score corresponding to each candidate song, based on the feature weighting factor corresponding to each target song feature.

In one or more embodiments of the present disclosure, after determining target songs based on the similarity scores of the candidate songs, further comprising: filtering the target songs based on a third song feature to obtain first optimized songs; the generating a recommended song list based on the target songs comprises: generating a recommended song list based on the first optimized songs; wherein the third song feature comprises at least one of the following: a song language, a song style, a song release year, a song repetition, and a singer repetition.

In one or more embodiments of the present disclosure, before acquiring the candidate song library information, further comprising: determining the number of candidate songs, according to the number of songs in a song list corresponding to the recommended song list; filtering the whole preset song library, according to the number of candidate songs, and determining candidate songs corresponding to the candidate song library information.

In a second aspect, according to one or more embodiments of the present disclosure, an apparatus for generating a song list is provided, the apparatus including:
an acquiring module, configured to acquire candidate song library information, wherein the candidate song library information comprises feature expressions of a candidate song, and the feature expressions represent song features in a plurality of dimensions;
a determining module, configured to determine a similarity score of at least one candidate song according to the candidate song library information and a target feature expression, wherein the target feature expression is a feature expression of a seed song, and the similarity score represents similarity between the candidate song and the seed song;
a generation module, configured to determine a target song based on the similarity score of the candidate song, and generate a recommended song list based on the target song.

In one or more embodiments of the present disclosure, after acquiring the candidate song library information, the acquiring module is further configured to: acquire a seed song in response to a user instruction; acquire a first feature extraction model corresponding the candidate song library information, and process the seed song based on the first feature extraction model to obtain the target feature expression, wherein the first feature extraction model is configured to extract at least two first song features, and the first song features are used to generate the candidate song library information.

In one or more embodiments of the present disclosure, before acquiring the candidate song library information, the acquiring module is further configured to: acquire a seed song in response to a user instruction; acquire a second feature extraction model corresponding to the seed song, and process the seed song based on the second feature extraction model to obtain the target feature expression, wherein the second feature extraction model is configured to extract at least two second song features.

In one or more embodiments of the present disclosure, when acquiring the candidate song library information, the acquiring module is further configured to: acquire a second feature extraction model corresponding to the seed song; based on the second feature extraction model, process the candidate songs to obtain the candidate song library information.

In one or more embodiments of the present disclosure, the determining module is specifically configured to: acquire first feature scores corresponding to a plurality of target song features of each candidate song, according to the feature expressions of each candidate song; acquire second feature scores corresponding to the plurality of target song features of the seed song, according to the target feature expression; calculate a distance between each first feature score corresponding to the candidate song and each second feature score corresponding to the seed song to obtain the similarity score corresponding to each candidate song.

In one or more embodiments of the present disclosure, when calculating the distance between each first feature score corresponding to each candidate song and each second feature score corresponding to the seed song to obtain the similarity score corresponding to each candidate song, the determining module is specifically configured to: determine a feature weighting factor corresponding to each target song feature according to the seed song; calculate a weighted distance between each first feature score corresponding to each candidate song and each second feature score corresponding to the seed song to obtain the similarity score corresponding to each candidate song, based on the feature weighting factor corresponding to each target song feature.

In one or more embodiments of the present disclosure, after determining the target song based on the similarity score of the candidate song, the generation module is further configured to: filter the target song based on a third song feature to obtain a first optimized song. When generating a recommended song list based on the target song, the generation module is specifically configured to: generate a recommended song list based on the first optimized song; the third song feature includes at least one of the following: a song language, a song style, a song release year, a song repetition, and a singer repetition.

In one or more embodiments of the present disclosure, before acquiring the candidate song library information, the acquiring module is further configured to: determine the number of candidate songs according to the number of songs in the song list corresponding to the recommended song list; filter the whole preset song library, according to the number of candidate songs, and determine the candidate songs corresponding to the candidate song library information.

In the third aspect, the embodiments of the present disclosure provide an electronic device, comprising: a processor; and a storage communicatively connected with the processor;
the storage stores a computer-executed instruction;
the processor executes the computer-executed instruction stored in the storage to implement the method for generating a song list as described in various possible designs of the first or second aspect.

In the fourth aspect, the embodiments of the present disclosure provide a computer-readable storage medium with a computer-executed instruction stored thereon, wherein the computer-executed instruction, when being executed by a processor, implements the method for generating a song list as described in various possible designs of the first or second aspect.

In the fifth aspect, the embodiments of the present disclosure provides a computer program product comprising a computer program that, when being executed by a processor, implements the method for generating a song list as described in various possible designs of the first or second aspect.

In the sixth aspect, the embodiments of the present disclosure provide a computer program that, when being executed by a processor, implements the method for generating a song list as described in various possible designs of the first or second aspect.

The above only describe preferred embodiments of the present disclosure and the technical principles used. Those skilled in the art should understand that the scope of disclosure involved in the present disclosure is not limited to the technical solutions formed by the specific combination of the above-mentioned technical features, but shall also cover other technical solutions formed by any combination of the above-mentioned technical features or their equivalent features without departing from the above-mentioned disclosure concept. For example, a technical solution formed by replacing the above-mentioned features with (but not limited to) technical features with similar functions disclosed in the present disclosure.

In addition, while operations are depicted in a specific order, this should not be construed as requiring them to be performed in the specific order in which they are shown or in a sequential order. In some context, multi-task and parallel processing can be beneficial. Similarly, although a number of specific implementation details are included in the above discussion, these should not be construed as limiting the scope of the present disclosure. Some features described in the context of individual embodiments may also be implemented in combination in a single embodiment. In contrast, the various features described in the context of a single embodiment may also be implemented in multiple embodiments individually or in any suitable sub-combination of embodiments.

Although the subject matter has been described in a language specific to the structural features and/or logical actions of the method, it should be understood that the subject matter defined in the claims is not necessarily limited to the specific features or actions described above. Instead, the specific features and actions described above are only exemplary forms of implementing the claims.

## Claims

1. A method for generating a song list, comprising:
acquiring candidate song library information, wherein the candidate song library information comprises feature expressions of a candidate song, and the feature expressions represent song features in a plurality of dimensions;
determining a similarity score of at least one candidate song, according to the candidate song library information and a target feature expression, wherein the target feature expression is a feature expression of a seed song, and the similarity score represents similarity between the candidate song and the seed song;
determining a target song based on similarity score of the candidate song, and generate a recommended song list based on the target song.

2. The method according to claim **1,** after acquiring the candidate song library information, further comprising:
acquiring a seed song in response to a user instruction;
acquiring a first feature extraction model corresponding to the candidate song library information, and processing the seed song based on the first feature extraction model to obtain the target feature expression, wherein the first feature extraction model is configured to extract at least two first song features, and the first song feature are used to generate the candidate song library information.

3. The method according to claim **1,** before acquiring the candidate song library information, further comprising:
acquiring a seed song in response to a user instruction;
acquiring a second feature extraction model corresponding to the seed song, and processing the seed song based on the second feature extraction model to obtain the target feature expression, wherein the second feature extraction model is used to extract at least two second song features.

4. The method according to claim **1,** wherein the acquiring candidate song library information comprises:
acquiring a second feature extraction model corresponding to the seed song;
processing the candidate songs based on the second feature extraction model to obtain the candidate song library information.

5. The method according to claim 1, wherein the determining a similarity score of at least one candidate song according to the candidate song library information and a target feature expression comprises:
acquiring first feature scores corresponding to a plurality of target features of each candidate song, according to the feature expressions of each candidate song;
acquiring second feature scores corresponding to a plurality of target features of the seed song, according to the target feature expression;
calculating a distance between each first feature score corresponding to each candidate song and each second feature score corresponding to the seed song to obtain the similarity score corresponding each candidate song.

6. The method according to claim 5, wherein the calculating a distance between each first feature score corresponding to each candidate song and each second feature score corresponding to the seed song to obtain the similarity score corresponding to each candidate song comprises:
determining a feature weighting factor corresponding to each target song feature, according to the seed song;
calculating a weighted distance between each first feature score corresponding to each candidate song and each second feature score corresponding to the seed song to obtain the similarity score corresponding to each candidate song, based on the feature weighting factor corresponding to each target song feature.

7. The method according to any one of claims 1 to 6, after determining target songs based on the similarity scores of the candidate songs, further comprising:
filtering the target songs based on a third song feature to obtain first optimized songs;
the generating a recommended song list based on the target songs comprises:
generating a recommended song list based on the first optimized songs;
wherein the third song feature comprises at least one of the following:
a song language, a song style, a song release year, a song repetition, and a singer repetition.

8. The method according to any one of claims 1 to 6, before acquiring the candidate song library information, further comprising:
determining the number of candidate songs, according to the number of songs in a song list corresponding to the recommended song list;
filtering the whole preset song library, according to the number of candidate songs, and determining candidate songs corresponding to the candidate song library information.

9. An apparatus for generating a song list, comprising:
an acquiring module, configured to acquire candidate song library information, wherein the candidate song library information comprises feature expressions of a candidate song, and the feature expressions represent song features in a plurality of dimensions;
a determining module, configured to determine a similarity score of at least one candidate song according to the candidate song library information and a target feature expression, wherein the target feature expression is a feature expression of a seed song, and the similarity score represents similarity between the candidate song and the seed song;
a generation module, configured to determine a target song based on the similarity score of the candidate song, and generate a recommended song list based on the target song.

10. An electronic device comprising a processor and a storage communicatively connected with the processor; wherein:
the storage stores a computer-executed instruction; and
the processor executes the computer-executed instruction stored in the storage to implement the method for generating a song list according to any one claims 1 to 8.

11. A computer-readable storage medium with a computer-executed instruction stored thereon, wherein the computer-executed instruction, when being executed by a processor, implements the method for generating a song list according to any one of claims 1 to 8.

12. A computer program product comprising a computer program that, when being executed by a processor, implements the method for generating a song list according to any of claims 1 to 8.

13. A computer program that, when being executed by a processor, implements the method for generating a song list according to any of claims 1 to 8.
